# EUROPÄISCHE PATENTANMELDUNG

(11) **EP 2 808 791 A1**
(43) Veröffentlichungstag der Anmeldung: **03.12.2014**
(21) Anmeldenummer: 13169353.3
(22) Anmeldetag: 27.05.2013
(51) Int. Cl.: G06F 9/50

(54) **Entfernte Reservierung von virtuellen Desktops**

(71) Anmelder: Siemens Aktiengesellschaft, 80333 München (DE)
(72) Erfinder: Pfeiffer, Andreas, 90473 Nürnberg (DE); Ukis, Vladyslav, 90489 Nürnberg (DE)

(57) **Zusammenfassung**

Die vorliegende Erfindung betrifft ein Reservierungssystem, ein Reservierungsverfahren und ein Computerprogrammprodukt zur entfernten Reservierung von virtuellen Desktops (vD) für einen Rich Thin Client, wobei die virtuellen Desktops (vD) aus einem virtuellen Desktop Pool buchbar sind. Dazu werden ein Erfassungsmodul, ein Reservierungssystem-Client (10), ein Reservierungssystem-Server (12) mit einem Zuweisungsmodul (11) und einem Adapter (13) bereitgestellt. Das Zuweisungsmodul (11) dient zum automatischen Zuweisen eines virtuellen Desktops (vD) in einem bestimmten Reservierungszeitraum auf garantierte Weise gemäß einer dynamischen und dedizierten Zuweisungsstrategie.

## Beschreibung

### GEBIET DER ERFINDUNG

Die vorliegende Erfindung liegt auf den Gebieten der Medizintechnik und der Informationstechnologie und betrifft insbesondere ein System, ein Verfahren und ein Computerprogrammprodukt zur entfernten Reservierung von virtuellen Desktops aus einem Desktop Pool, wobei der virtuelle Desktop unterschiedliche technische Ressourcen zur medizintechnischen Datenverarbeitung umfasst, wie beispielsweise technische Prozesse im Rahmen der medizinischen Bildgebung, Bildverarbeitung, Befundungsprozesse, Bilddarstellungen im Rahmen von medizinischen Untersuchungsprozessen etc.

### STAND DER TECHNIK

In der klassischen Von-Neumann-Architektur ist es üblicherweise vorgesehen, dass ein User an einem ihm fest zugeordneten computergestützten Arbeitsplatz arbeitet, mit einem Desktop, einem Computer mit Prozessoreinheit (CPU: Central Processing Unit), Speicherbausteinen Input-/Output-Schnittstellen, Benutzeroberflächen (z.B. grafische Benutzeroberfläche, Maus, Tastatur etc.) und auf dem Computer installierten Applikationen zur Datenverarbeitung. Bei dieser Computer-Architektur hat es sich als nachteilig erwiesen, dass diese wenig elastisch ist und somit sehr schlecht an die aktuellen Bedarfsschwankungen angepasst werden kann. Sobald beispielsweise ein User nicht am Platz ist, muss dessen Computersystem dennoch bereitgestellt werden, obwohl es aktuell nicht verwendet und somit auch nicht ausgelastet wird.

Um diese Nachteile zu überwinden, wird seit einiger Zeit auf Virtualisierungslösungen zurückgegriffen, deren Ziel es ist, Computersoftware und/oder Computerhardware zu virtualisieren. Dazu werden virtuelle Maschinen eingesetzt, die bestimmte Computer-basierte, technische Ressourcen bereitstellen (wie beispielsweise Recheneinheiten, Steuerwerke (Controll Unit), Speicherwerke oder Speicherbausteine sowie Applikationen.

Virtuelle Desktops sind üblicherweise auf einem Computer gehosted und können von mehreren Rechnern über eine Netzwerkverbindung (z.B. eine Remotedesktop-Verbindung) erreichbar sein. Dabei kann ein sogenannter virtueller Desktop Pool bereitgestellt werden, als Menge von mehreren, üblicherweise identisch konfigurierten Computern. Ziel eines virtuellen Desktop Pools ist es grundsätzlich, einem Anwender - je nach Bedarf - einen virtuellen Computer zuzuweisen, so dass der Anwender Applikationen auf dem Desktop ausführen und Ressourcen in Anspruch nehmen kann. Die jeweiligen virtuellen Desktops und die User-Konten (bzw. die jeweiligen User) mit den jeweiligen Zuordnungen, Berechtigungen und Zeitanfragen müssen verwaltet werden.

Im Stand der Technik erfolgt die Verwaltung von virtuellen Desktops in Pools grundsätzlich nach zwei hauptsächlichen Modellen bzw. zwei Strategien:
1. Einer dynamischen Zuweisungsstrategie oder
2.Einer dedizierten Zuweisungsstrategie.

Bei der dynamischen Zuweisungsstrategie von virtuellen Desktops eines Desktop Pool wird ein freier virtueller Desktop dynamisch einem einloggenden User zugewiesen.

Bei der dedizierten Zuweisungsstrategie wird ein dedizierter Desktop von einem Administrator (in der Regel manuell) einem bestimmten Anwender fest zugeordnet bzw. zugewiesen. Der einloggende User erhält somit immer genau diesen (dedizierten) Desktop.

Die beiden Zuweisungsstrategien bzw. -Protokolle sind mit spezifischen Vor- und Nachteilen verbunden. So kann bei dem dedizierten Protokoll die Verfügbarkeit des jeweiligen Arbeitsplatzes (Desktops) beim Einloggen garantiert werden und auch eine Zustandssicherung zwischen den Arbeitssitzungen (insbesondere zwischen Client und Host) ist hier möglich. Diese beiden Eigenschaften sind jedoch bei der dynamischen Zuweisungsstrategie nicht vorhanden. Des Weiteren ist es bei der dedizierten Zuweisungsstrategie vorgesehen, dass jeweils ein virtueller Desktop auf manuelle Weise einem User zugeordnet wird und diese Zuweisung auch manuell wieder aufgehoben wird bzw. werden muss. Diese beiden Eigenschaften (manuelle Zuweisung und Aufhebung der Zuweisung) sind bei der dynamischen Zuweisungsstrategie nicht gegeben. Im Gegenteil finden bei der dynamischen Zuweisungsstrategie eine dynamische Zuweisung von zumindest einem virtuellen Desktop zu einem User und auch eine dynamische Aufhebung dieser Zuweisung statt.

Ein weiterer Nachteil der bisherigen virtuellen Desktopzuweisungsstrategien ist darin zu sehen, dass sie nicht oder unzureichend für medizinische Bildverarbeitungssysteme ausgelegt sind. Medizinische Bildverarbeitungssysteme benötigen andere Eigenschaften, als die mit den oben genannten dynamischen und dedizierten Pool Strategien bereitgestellt werden können. Dies begründet sich daher, dass die virtualisierten Clients häufig mit nicht-virtualisierten Servern, sondern mit Hardware-basierten Servern verbunden sind. Ein physikalischer Server kann jedoch nur eine bestimmte Anzahl von Clients parallel unterstützen und desweiteren ist es nicht möglich, diese Server dynamisch und bedarfsgerecht (On Demand) im Datenzentrum (also in der Cloud) bereitzustellen.

Desweiteren ist die Elastizität einer medizinischen Bildverarbeitungscloud sehr begrenzt, da hier umfangreiche technische Ressourcen (hinsichtlich Verarbeitungskapazität, Speicherkapazität, Netzwerkbandbreite und Applikationen etc.) erforderlich sind. Die Elastizität ist somit immer von einer bestimmten (Mindest-) Anzahl von bereitgestellten Hardware-Servern abhängig. Eine Virtualisierung der Hardware-Server, also der physikalischen Server, ist jedoch nur bedingt möglich, da die Servercomputer über spezielle technische Ressourcen verfügen müssen. So ist es beispielsweise für bestimmte umfangreiche Datenverarbeitungsapplikationen notwendig, hochspezialisierte Grafikkarten bereitzustellen, um die Bildverarbeitungsalgorithmen in ausreichender Performance sicherstellen zu können.

Ein weiterer wichtiger Gesichtspunkt der vorliegenden Erfindung ist auch darin zu sehen, dass eine medizintechnische Anwendung es mit sich bringt, dass kritische Untersuchungen und damit verbundene Computer-basierte Verarbeitungsprozesse sicher ausgeführt werden müssen (beispielsweise Untersuchungen im Rahmen von lebenserhaltenden Maßnahmen oder umfangreiche Bildakquisitionsmaßnahmen, die sich über einen längeren Zeitraum erstrecken). Solche Untersuchungen sind häufig im Vorfeld geplant und von daher bekannt. Bei den bisher im Stand der Technik bekannten Systemen ist es jedoch leider nicht möglich, solche Systemanforderungen im Vorfeld bei der Zuweisungsstrategie eines Desktops zu berücksichtigen bzw. einzuplanen.

### AUFGABE DER VORLIEGENDEN ERFINDUNG

Die vorliegende Erfindung hat sich deshalb zur Aufgabe gestellt, die oben erwähnten Nachteile von Systemen aus dem Stand der Technik zu überwinden. Insbesondere soll es möglich sein, eine Zuweisungsstrategie für virtuelle Desktops bereitzustellen, die elastisch genug ist, um an den aktuellen jeweiligen medizinischen Anwendungsfall angepasst werden zu können. Darüber hinaus sollen kritische Untersuchungen (also Untersuchungen, die hohe Bedingungen und Anforderungen an die technischen Ressourcen, wie Rechenlast, bereitgestellte Server etc. stellen) im Vorfeld für eine Zuweisungsstrategie eingeplant werden können, um die jeweiligen Desktopressourcen reservieren zu können. Desweiteren soll eine manuelle Desktopzuweisung vermieden werden, da diese einen untragbaren Administrationsaufwand mit sich bringt und damit mit hohen Kosten verbunden ist. Die Zuweisungsstrategie soll somit voll automatisch durchgeführt werden, wobei die Verfügbarkeit eines Cloud-basierten Desktops beim Einloggen garantiert werden kann und auch zwischen den einzelnen Arbeitssitzungen eine Zustandssicherung erfolgt. Desweiteren soll die Zuweisungsstrategie dynamisch sein und auch die Aufhebung einer Zuweisung soll dynamisch an die jeweiligen Netzwerkbedingungen anpassbar sein.

### BESCHREIBUNG DER ERFINDUNG

Die vorliegende Erfindung betrifft ein Verfahren, ein System und ein Produkt zur Reservierung eines virtuellen Desktops (mit entsprechenden technischen Ressourcen) für einen Client, insbesondere für einen Computer-basierten schmalen Client, wobei der virtuelle Desktop die jeweils notwendigen technischen Ressourcen zur medizintechnischen Datenverarbeitung umfasst. Dazu wird ein Pool von Desktops auf virtuellen Maschinen bereitgestellt, die auf einem Host-Rechner gehosted sind. Der jeweilige Client (üblicherweise eine Gruppe von Clients) greift über eine Netzwerkverbindung, und vorzugsweise über einen bereitgestellten Web Service, auf den Host zu.

Das Verfahren umfasst folgende Verfahrensschritte, die nicht notwendigerweise in der nachstehend erwähnten Reihenfolge ausgeführt werden müssen:
- Erfassen einer Reservierungsanfrage, die vorzugsweise einen Reservierungszeitraum umfasst, für zumindest einen virtuellen Desktop. Dabei erfolgt das Erfassen Client-seitig. Dies bedeutet, dass die Reservierungsanfrage entweder unmittelbar auf dem lokalen Rechner bzw. einer lokalen Applikation des Clients erfolgt oder, dass sie in einem Modul (z.B. Applikation) erfolgt, die dem Client zugeordnet ist. Dabei kann es sich beispielsweise auch um einen Applikationsclient handeln, wie z.B. um einen Email-Client (z.B. Outlook-Client der Firma Microsoft oder Microsoft Outlook Express).
- Weiterleiten der erfassten Reservierungsanfrage an einen Client des Reservierungssystems. Der Client des Reservierungssystems ist immer noch Client-seitig vorgehalten. Vorzugsweise kann es sich hier um eine auf dem Client installierte Applikation handeln.
- Weiterleiten der Reservierungsanfrage von dem Client des Reservierungssystems an einen Server des Reservierungssystems. Mit diesem Schritt des Weiterleitens erfolgt ein Zugriff über einen Web Service und damit werden Daten in die Cloud übertragen, da sich der Server des Reservierungssystems serverseitig befindet und nur über eine Internetverbindung (z.B. über ein http(s)-Protokoll) verfügbar ist.
- Sobald der Server des Reservierungssystems die jeweilige Reservierungsanfrage erhalten hat, kann der Server umgehend oder zu einem späteren Zeitpunkt ein dynamisches, dediziertes und automatisches Zuweisen zumindest eines virtuellen Desktops aus dem virtuellen Desktop Pool an den (bzw. zu dem) anfragenden Client für den bestimmten Reservierungszeitraum auf garantierte Weise ausführen. Dabei ist auch sichergestellt, dass eine Zustandssicherung zwischen mehreren Cloud-Sitzungen erfolgt.
- Erstellen einer Zugriffsmöglichkeit für den anfragenden Client auf den ihm zugewiesenen virtuellen Desktop während des bestimmten Reservierungszeitraums. Sobald der Reservierungszeitraum abgelaufen ist, ist es vorgesehen, dass der jeweilige virtuelle Desktop automatisch wieder freigegeben wird, so dass er wieder für andere Clients verfügbar wird.
- Nach dem Verfahrensschritt des Zuweisens wird auch ein Zuweisungsstatus für den anfragenden Client aktiviert. Dies bedeutet, dass der anfragende Client von einem Normalstatus (ohne Reservierungsanfrage und ohne zugewiesenen Desktop) in einen Zuweisungsstatus überführt wird. Sobald sich ein Client in einem Zuweisungsstatus befindet, ist es möglich, dass er einen Zugriff auf den ihm zugewiesenen virtuellen Desktop erhält, falls der jeweils zugewiesene virtuelle Desktop verfügbar ist bzw. vordefinierbare Verfügbarkeitskriterien erfüllt. Mit diesem Merkmal wird es möglich, eine zweite Zugriffsmöglichkeit bereitzustellen, die bereits einen früheren Zeitraum als den Reservierungszeitraum betrifft. Somit kann der Client auch in einer Zeitphase zwischen Reservierungsanfrage und/oder Reservierungszuweisung und Beginn des Reservierungszeitraums einen Zugriff auf den virtuellen Desktop haben, falls der jeweilige virtuelle Desktop zu diesem Zeitpunkt nicht anderweitig belegt bzw. vergeben ist. Mit diesem Merkmal kann die Verfügbarkeit und die Performance des gesamten Systems gesteigert werden.

Gemäß einem weiteren Aspekt bezieht sich die vorliegende Anmeldung auf ein Reservierungssystem zur Reservierung zumindest eines virtuellen Desktops für einen Client über einen virtuellen Desktop Pool, wobei der virtuelle Desktop technische Ressourcen zur medizintechnischen Datenverarbeitung umfasst und auf einem Host gehosted ist. Das Reservierungssystem umfasst:
- Ein Client-seitiges Erfassungsmodul zum Erfassen einer Reservierungsanfrage für einen Reservierungszeitraum für einen virtuellen Desktop; das Erfassungsmodul kann als Applikationsclient (z.B. als Emailclient) ausgebildet sein.
- Einen Reservierungssystem-Client, der zum Empfang von zumindest einer Reservierungsanfrage von dem Erfassungsmodul bestimmt ist. Darüber hinaus ist der Reservierungssystem-Client zum Weiterleiten der Reservierungsanfrage an einen Reservierungssystem-Server bestimmt.
- Ein Zuweisungsmodul, das von dem Reservierungssystem-Server umfasst ist und zum dynamischen, dedizierten und automatischen Zuweisen eines virtuellen Desktops des Desktop Pools an den anfragenden Client für den bestimmten Reservierungszeitraum auf garantierte Weise bestimmt ist. Das Zuweisungsmodul ist darüber hinaus dazu bestimmt, eine Zustandssicherung zwischen mehreren Desktopsitzungen bzw. Cloud-Sitzungen auszuführen.
- Einen Adapter zum Erstellen einer Zugriffsmöglichkeit für den anfragenden Client auf den, dem anfragenden Client zugewiesenen Desktop während des bestimmten Reservierungszeitraums. Desweiteren ist der Adapter dazu bestimmt, anschließend (also nach Ende des Reservierungszeitraums) die Desktopressource freizugeben. Desweiteren ist der Adapter dazu bestimmt, einen Zuweisungsstatus für den anfragenden Client zu aktivieren, nachdem das Zuweisungsmodul dem Client den jeweiligen virtuellen Desktop zugewiesen hat. Mit anderen Worten wird der Client in einen Zuweisungsstatus überführt, nachdem ihm ein Desktop zugewiesen worden ist, auch wenn der Zuweisungszeitraum noch nicht begonnen hat und noch in der Zukunft liegt. Sobald ein Client also von dem Reservierungssystem-Server verbucht wurde, wird der jeweilige Client in einen Zuweisungsstatus überführt. Dies hat zur Folge, dass der jeweilige Client auch vor dem Reservierungszeitraum auf die virtuelle Desktopressource zugreifen kann, falls diese aktuell verfügbar ist bzw. falls jeweils zugewiesene Verfügbarkeitskriterien erfüllt sind.

Gemäß einem Aspekt ist das Erfassungsmodul auf dem Client ausgebildet und kann z.B. als Emailclient (z.B. als ein Outlook-Client eines Microsoft-Betriebssystems) bereitgestellt werden. Alternativ können andere Erfassungsmodule bereitgestellt werden, die über einen Web Service mit dem Reservierungssystem-Server interagieren.

Gemäß einem Aspekt ist das Erfassungsmodul neben dem Erfassen der Reservierungsanfrage mit dem Reservierungszeitraum desweitern noch dazu bestimmt, vorbestimmbare Reservierungsbedingungen zu überprüfen. Die Überprüfung wird vorzugsweise Client-seitig ausgeführt und umfasst:
- Das Überprüfen einer Maximalbedingung, anhand der überprüft wird, dass der Reservierungszeitraum eine Maximalzeitschwelle nicht überschreitet;
- Das Überprüfen einer Minimalbedingung, anhand der überprüft wird, dass der Reservierungszeitraum eine Minimalzeitschwelle nicht unterschreitet;
- Das Überprüfen einer Ausschließlichkeitsbedingung, anhand der überprüft wird, dass der virtuelle Desktop nicht bereits (von andere Clients) reserviert und/oder angefragt ist;
- Das Überprüfen einer Atomaritätsbedingung, anhand der überprüft wird, dass nicht mehr als ein virtueller Desktop zu einem Zeitpunkt reserviert ist.

Gemäß einem weiteren Aspekt umfasst das Reservierungssystem einen Host-Anteil, der bezogen auf das Reservierungssystem serverseitig implementiert ist, und einen Clientanteil. Der Host-Anteil wird vorzugsweise in einer Cloud vorgehalten und dient dazu, die Reservierungsanfrage des anfragenden Clients zu akzeptieren. Dazu greift der Server bzw. der Reservierungssystem-Host auf eine, im Vorfeld auswählbare Reservierungspolicy zurück. Der Host-Anteil dient desweiteren zum Verwalten von Zuständen der Clients. Hier werden alle eingehenden Reservierungsanfragen und Zuweisungen verwaltet und gespeichert. Auch die jeweiligen Zustände der Clients werden hier verwaltet (damit wird hier Informationen vorgehalten, ob sich beispielsweise ein bestimmter Client im Normalzustand oder im Zuweisungsstatus befindet). Der Host-Anteil dient des Weiteren zum Verwalten von Zuweisungen von virtuellen Desktops zu anfragenden Client. Mit diesem Modul wird es möglich, Informationen darüber zu erlangen, ob eine bestimmte Desktopressource bereits reserviert ist und wenn ja, in welchem Zeitraum. Darüber hinaus werden auch Aufhebungen von Zuweisungen verwaltet.

Wie vorstehend bereits ausgeführt, erfolgt die Verbindung zwischen dem Client-seitigen System und dem Host-seitigen Serversystem üblicherweise über eine Internetprotokollverbindung. Vorzugsweise wird hier auf einen Web Service zugegriffen.

Die hauptsächliche Anwendung des vorstehend beschriebenen Reservierungssystems und -verfahrens betrifft die Medizintechnik. Damit handelt es sich bei dem jeweiligen Desktop und Desktopressourcen um medizintechnische Ressourcen, beispielsweise um eine medizinische Befundungsapplikation, die auf einer Bilddatenverarbeitung basiert. Dies hat den Hintergrund, dass bei einer medizinischen Befundung häufig umfangreiche Volumendatensätze (beispielsweise von MRT-Scannern, Tomosyntheseverfahren oder computertomografischen Verfahren akquiriert worden sind) hohe Anforderungen an die Rechenleistung gestellt werden, da es bei einer Befundung erforderlich ist, dass die medizinischen Bilder schnell und gleichzeitig in hoher Auflösung auf einem Monitor dargestellt werden.

Das Verfahren zur Zuweisung ist damit computer-implementiert und läuft vollautomatisch ab, das heißt ohne jegliche Benutzerinteraktion eines Anwenders. Das Verfahren kann teilweise oder vollständig software-basiert sein. Darüber hinaus ist es möglich, das Verfahren bzw. System als embedded system in ein medizinisches Gerät (z.B. in eine Bildakquisitionsanlage, wie eine MRT-Anlage und/oder in einen Bildprozessor (z.B. im Rahmen des Postprocessings) einzubetten bzw. zu integrieren. Das Verfahren dient der Speicherung, Verarbeitung und Weiterleitung von aufbereiteten Daten (in Form von Planungsdaten oder zugeordneten Computereinheiten) anhand computer-basierter technischer Geräte (Netzwerk) an andere Instanzen. Damit berücksichtigt das Verfahren auch die Gegebenheiten der Datenverarbeitungsanlage, indem für den jeweiligen Anwendungsfall mit jeweils unterschiedlichen Netzwerkkapazitäten eine optimale Zuweisung zumindest eines virtuellen Desktops ermöglicht wird.

Die vorstehend beschriebenen, erfindungsgemäßen Ausführungsformen des Verfahrens können auch als Computerprogrammprodukt mit einem Computerprogramm ausgebildet sein, wobei der Computer zur Durchführung des oben beschriebenen, erfindungsgemäßen Verfahrens veranlasst wird, wenn das Computerprogramm auf dem Computer bzw. auf einem Prozessor des Computers ausgeführt wird.

Eine alternative Aufgabenlösung besteht auch in einem Computerprogramm mit Computer-Programmcode zur Durchführung aller Verfahrensschritte des beanspruchten oder oben beschriebenen Verfahrens, wenn das Computerprogramm auf dem Computer ausgeführt wird. Dabei kann das Computerprogramm auch auf einem maschinenlesbaren Speichermedium gespeichert sein.

Eine alternative Aufgabenlösung sieht ein Speichermedium vor, das zur Speicherung des vorstehend beschriebenen, computerimplementierten Verfahrens bestimmt ist und von einem Computer lesbar ist.

Es liegt im Rahmen der Erfindung, dass nicht alle Schritte des Verfahrens zwangsläufig auf ein und derselben Computerinstanz ausgeführt werden müssen, sondern sie können auch auf unterschiedlichen Computerinstanzen - und damit als verteiltes System - ausgeführt werden. Dabei ist es möglich, dass einzelne Abschnitte des vorstehend beschriebenen Verfahrens (bzw. Komponenten des Systems) in einer ersten verkaufsfähigen Einheit und die restlichen Komponenten (oder Abschnitte des Verfahrens) in einer anderen verkaufsfähigen Einheit ausgeführt werden können. Auch kann die Abfolge der Verfahrensschritte gegebenenfalls variiert werden.

In der folgenden detaillierten Figurenbeschreibung werden nicht einschränkend zu verstehende Ausführungsbeispiele mit deren Merkmalen und weiteren Vorteilen anhand der Zeichnung besprochen.

### KURZE BESCHREIBUNG DER FIGUREN

- Figur 1: zeigt einen schematischen Aufbau eines Reservierungssystems gemäß einer bevorzugten Ausführungsform der Erfindung,
- Figur 2: zeigt ein Ablaufdiagramm für ein Verfahren zur entfernten Reservierung eines virtuellen Desktops gemäß einer bevorzugten Ausführungsform der Erfindung,
- Figur 3: eine schematische Darstellung einer beispielhaften Bildschirmoberfläche zur Erfassung von Reservierungsanfragen in einem Email Client,
- Figur 4: eine schematische Darstellung eines Ausführungsbeispiels gemäß einer bevorzugten Ausführung der Erfindung,
- Figur 5: eine schematische Darstellung eines Pre-VIP Status und
- Figur 6: eine schematische Darstellung eines Post-VIP Status.

### DETAILLIERTE BESCHREIBUNG DER FIGUREN

Im Folgenden werden die im Rahmen dieser Anmeldung verwendeten Begrifflichkeiten näher erläutert.

Das Reservierungssystem ist vorzugsweise computergestützt und umfasst mehrere Computereinheiten, die über ein Netzwerk, insbesondere über das Internet, miteinander in Datenaustausch stehen. Das Reservierungssystem umfasst einen Client-Anteil und einen Host-Anteil und dient zur entfernten Reservierung eines virtuellen Desktops.

Der Begriff "virtueller Desktop" bezieht sich auf einen virtuellen computer-basierten Arbeitsplatz. Ein virtueller Desktop umfasst virtuelle bzw. gehostete Applikationen und insbesondere Grafikkarten-intensive Applikationen, wie es im Bereich der Bildverarbeitung und Medizintechnik üblich ist (z.B. auf dem Gebiet der Befundungssysteme). Bei dem virtuellen Desktop kann es sich somit beispielsweise um eine (oder mehrere) Befundungsapplikation(en) handeln, bei der (denen) unterschiedliche medizinische Bilddaten (darunter zwei- und/oder dreidimensionale Bilddatensätze von unterschiedlichen Modalitäten, wie z.B. Computertomographen, Magnetresonanztomographen, Ultraschallgeräten etc.) bearbeitet werden müssen. Der virtuelle Desktop wird aus einer Menge bzw. einem Pool von virtuellen Desktops ausgewählt. Dabei werden bestimmte und vorkonfigurierbare Zuweisungsstrategien angewendet. Der virtuelle Desktop wird üblicherweise auf einer sogenannten virtuellen Maschine bereitgestellt. Dabei handelt es sich um einen Baustein (z.B. Computer) einer virtuellen Infrastruktur, der als virtuelle Instanz mit einer dedizierten Hardwarezusammenstellung auf einem spezifischen Betriebssystem ausgeführt wird. Die virtuelle Maschine kann auch als Laufzeitumgebung bereitgestellt werden. Üblicherweise stellt die virtuelle Maschine als Host-System eine Möglichkeit bereit, ein bestimmtes Programm oder eine Kombination von Anwendungsprogrammen mit Anwendungscode direkt auf einem Prozessor ausführen zu können. Alternativ kann auch ein Interpreter bereitgestellt werden, um den Anwendungscode zu interpretieren und indirekt ausführen zu können. Um die Ressourcenzuweisung von den unterschiedlichen Ressourcen auf die einzelnen virtuellen Maschinen zu verwalten, wird im Stand der Technik ein sogenannter Hypervisor eingesetzt. Dabei verteilt der Hypervisor die jeweiligen Ressourcen, mitunter auch die Hardwareressourcen, wie beispielsweise Speicher und Prozessoren etc., derart, dass für jedes einzelne Virtual Machine Betriebssystem alle Ressourcen bei Bedarf verfügbar sind. Grundsätzlich können unterschiedliche Hardware- und/oder Softwareelemente virtualisiert werden, wie beispielsweise einzelne Prozessoren, Prozessorbestandteile, Laufwerke, Arbeitsspeicher, Applikationen etc. In der bevorzugten Ausführungsform der Erfindung werden nur Softwareanteile virtualisiert.

Der Begriff "Reservierung" betrifft die Verwaltung von computertechnischen Ressourcen (Software und/oder Hardware) im Rahmen einer bestimmten Anwendung und zur Verfügbarmachung der Ressourcen für einen Anwender. Die Reservierung umfasst somit eine Planung, eine Zuweisung und eine Ausführung des virtuellen Desktops. Letzteres bezieht sich insbesondere auf die Ausführung von zugewiesenen virtuellen Applikationen auf einem Client.

Bei dem Client handelt es sich um ein computer-basiertes Gerät, wie beispielsweise um Workstations, mobile Geräte, wie Mobilfunkgeräte, Laptops, Smartphones und dergleichen. Vorzugsweise handelt es sich bei dem Client um einen Rich-Thin-Client, der als schmaler Client ausgelegt ist und über eine Netzwerkanbindung direkt oder indirekt mit einem Server-Host in Datenaustausch steht. Damit wird es möglich, auch schmale (Thin) Clients mit umfangreichen computertechnischen Ressourcen zur Verfügung zu stellen.

In der bevorzugten Ausführungsform umfasst das computer-basierte Reservierungssystem einen Client-Anteil und einen Host-Anteil. Dabei umfasst der Client-Anteil seinerseits ein Erfassungsmodul C und einen Reservierungssystem-Client 10. Der Server-Anteil 12 umfasst ein Zuweisungsmodul 11 und einen Adapter 13. Dabei interagieren die Client-seitigen Einheiten C, 10 und die Server-seitigen Einheiten 12, 11, 13, VM über ein Cloud-System und insbesondere gemäß einem https-Protokoll. Die vorstehend genannten Einheiten bzw. Elemente werden nachstehend im Zusammenhang mit den Figuren noch genauer erläutert.

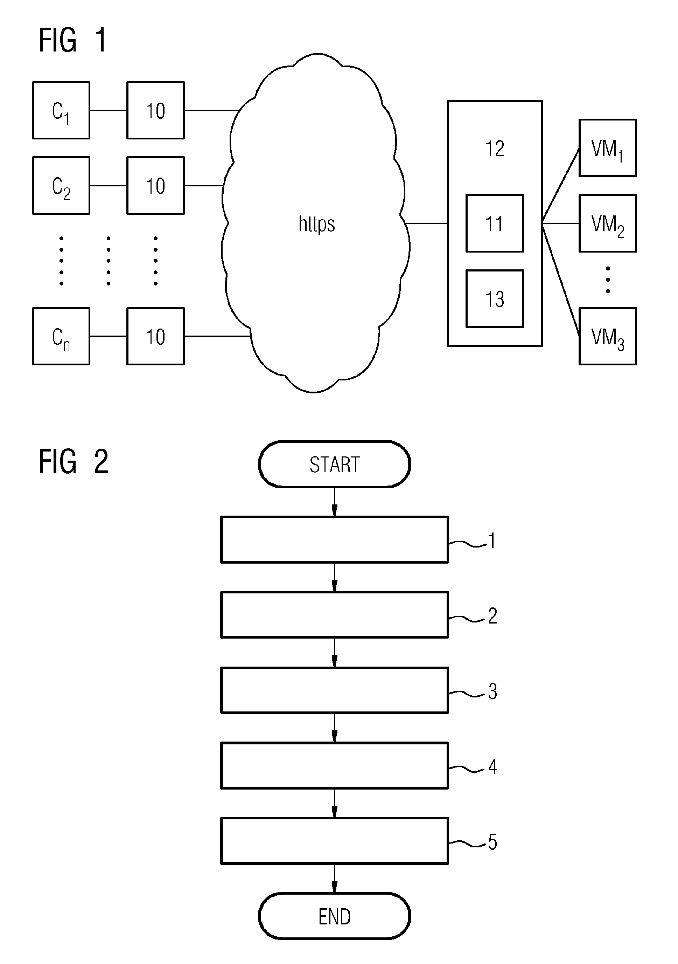

Figur 1 zeigt eine schematische Darstellung eines Reservierungssystems zur entfernten Reservierung zumindest eines virtuellen Desktops vD für einen Client, der in den Figuren generell mit dem Bezugszeichen C bezeichnet ist.

Der Client ist vorzugsweise als Rich Thin Client (RTC) ausgebildet und interagiert mit einem Client-seitigen Erfassungsmodul, das beispielsweise als Applikationsclient, wie z.B. eines Email-Clients (z.B. Outlook-Client des Betriebssystems Windows) ausgebildet sein kann. Die Client-seitigen computer-basierten Einheiten interagieren über die Cloud (beispielsweise über das https-Protokoll) mit Server-Anteilen. Die Server-seitigen Anteile umfassen den Reservierungssystem-Server 12. Der Reservierungssystem-Server 12 umfasst vorzugsweise weitere Computerbestandteile, die zumindest teilweise in Figur 1 dargestellt sind. Dazu zählen zumindest das Zuweisungsmodul 11 und der Adapter 13. Der Reservierungssystem-Server 12 interagiert mit einem Pool von virtuellen Maschinen, die in den Figuren mit den Bezugszeichen VM₁, VM₂, VM₃ ... gekennzeichnet sind. Die virtuellen Maschinen VM₁, VM₂, VM₃... hosten Bestandteile des virtuellen Desktops vD.

Im Folgenden wird unter Bezugnahme auf Figur 2 ein typischer Ablauf des erfindungsgemäßen Reservierungs- und Zuweisungsverfahren näher erläutert.

Nach dem Start des Reservierungssystems erfolgt in Schritt 1 das Absetzen und Erfassen einer Reservierungsanfrage für einen virtuellen Desktop vD in einem bestimmten Reservierungszeitraum. Dies wird vorzugsweise Client-seitig ausgeführt und kann beispielsweise als Bestandteil einer Outlook-Applikation ausgeführt werden.

In Schritt 2 kann die erfasste Reservierungsanfrage an einen Client des Reservierungssystems weitergeleitet werden. Alternativ kann eine entsprechende Benachrichtigung an den Client des Reservierungssystems (Reservierungssystem-Client) 10 übermittelt werden. Der Reservierungssystem-Client kann beispielsweise als Microsoft Exchange Server ausgebildet sein. Der Exchange Server kann dann die erfasste Reservierungsanfrage an den Client des Reservierungssystems 10 weiterleiten. Gemäß einer bevorzugten Weiterbildung der Erfindung ist es vorgesehen, dass sich alle Clients des Reservierungssystems 10 grundsätzlich am Reservierungssystem 10 in einer Vorbereitungsmaßnahme registriert haben müssen. Damit kann sichergestellt werden, dass alle Reservierungssystem Clients 10 auch in zulässiger Weise (also als berechtigte Instanz) Reservierungsanfragen absetzen können und zur Weiterleitung von Nachrichten berechtigt sind. Dazu ist im Vorfeld eine Registrierung von Reservierungssystem-Clients vorgesehen.

Im nächsten Schritt (in Figur 2 nicht separat dargestellt) benachrichtigt der Reservierungssystem-Client 10 den Reservierungssystemserver 12 über die jeweilige Reservierungsanfrage. Daraufhin kann der Reservierungssystem-Server 12 entsprechende weitere Schritte zur Reservierung zumindest eines virtuellen Desktops vD einleiten.

In Schritt 3 erfolgt das Zuweisen zumindest eines virtuellen Desktops vD für einen Client C, wobei der virtuelle Desktop vD aus dem virtuellen Desktop Pool bereitgestellt wird und Server-seitig auf einem Host gehostet ist. Bei dem Zuweisen wird sowohl eine dynamische als auch eine dedizierte Zuweisungsstrategie angewendet.

In Schritt 4 erfolgt das Erstellen einer Zugriffsmöglichkeit für den anfragenden Client C auf dem ihm zugewiesenen virtuellen Desktop vD während des bestimmten Reservierungszeitraums. Üblicherweise liegt der Reservierungszeitraum relativ zum Zeitpunkt des Erfassens der Reservierungsanfrage und/oder relativ zum Zeitpunkt des Zuweisens in Zukunft.

In Schritt 5 wird ein Zuweisungsstatus für den anfragenden Client C aktiviert. Damit wird der Client C von einem Normalstatus in den Zuweisungsstatus transferiert. Lediglich im Zuweisungsstatus kann der Client unter bestimmten Umständen auch schon früher auf dem ihm zugewiesenen virtuellen Desktop vD zugreifen. Dies ist insbesondere dann möglich, falls der jeweils zugewiesene virtuelle Desktop vD nicht von anderen Clients belegt ist und somit frei verfügbar ist. In vorteilhaften Weiterbildungen können hier noch weitere vordefinierbare Verfügbarkeitskriterien definiert werden. Falls die Verfügbarkeitskriterien alle erfüllt sind, kann der jeweilige Client bereits vor dem Reservierungszeitraum auf den jeweiligen virtuellen Desktop zugreifen.

Anschließend kann der jeweilige Reservierungsvorgang beendet werden. Selbstverständlich ist es möglich, das Reservierungsverfahren parallel für mehrere Clients C und/oder für mehrere virtuelle Desktops vD sozusagen gleichzeitig anzuwenden. Darüber hinaus kann das Verfahren auch sequenziell für unterschiedliche Prozesse und Aufgaben angewendet werden. Desweiteren sei an dieser Stelle darauf hingewiesen, dass die unter Bezugnahme auf Figur 2 beschriebene Abfolge der Verfahrensschritte nicht zwingend eingehalten werden muss. So ist es beispielsweise möglich, dass nach dem Zuweisen in Schritt 3 unmittelbar eine Aktivierung des Zuweisungsstatus für den anfragenden Client durchgeführt wird und erst nachfolgend Schritte eingeleitet werden, um dem Client die Zugriffsmöglichkeit auf die ihm zugewiesene virtuelle Desktop Ressource für den zukünftigen Reservierungszeitraum zu ermöglichen.

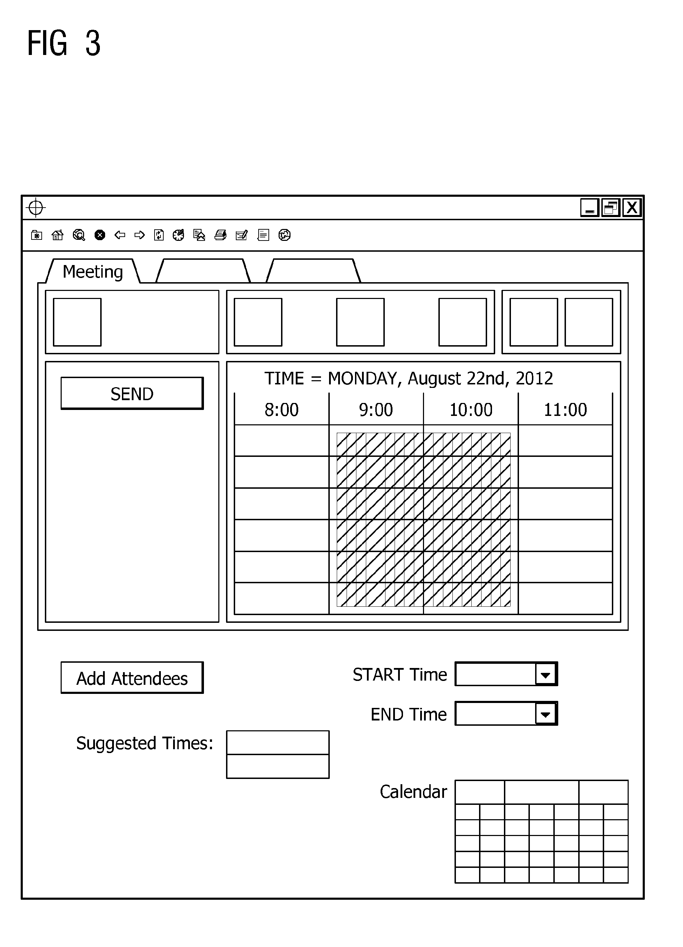

In Figur 3 ist schematisch eine Benutzeroberfläche für ein Reservierungssystem gemäß einer bevorzugten Ausführungsform der Erfindung dargestellt.

Gemäß einem Ausführungsbeispiel kann der Reservierungssystem-Client als Email Client ausgebildet sein oder in einen Email Client integriert sein. Die Oberfläche umfasst unterschiedliche Interaktionsfelder und in dem in Figur 3 dargestelltem Beispiel eine Registerkarte zu dem Aspekt "Meeting". Darüber hinaus können noch weitere Registerkarten zu anderen Aspekten bereitgestellt werden (z.B. für "Insert" und "Format Text"). Darunter findet sich eine weitere Auswahl von Interaktionsschaltflächen. Hier können beispielsweise Einladungen bzw. Reservierungen gelöscht werden (Cancel). Es können weitere Schaltflächen bereitgestellt werden, beispielsweise zu folgenden Aspekten:
- Reservierungen/Einladungen - Appointment
- Planungsassistenten - Scheduling Assistant
- Live Meeting
- Conference Call
- Meeting Workspace
- Schaltflächen zur Kategorisierung und zum Einstellen von einer Erinnerungsfunktion.

Darunter finden sich Schaltflächen zum Versenden von Nachrichten und in der Mitte findet sich ein großes Fenster zur Auswahl und Anzeige von Zeitplanungsdaten bzw. Reservierungszeiträumen. In dem in Figur 3 gezeigtem Beispiel kann beispielsweise ein virtueller Desktop an einem Montag den 22. August 2012 von 9 bis 10 Uhr reserviert werden. Darunter finden sich weitere Schaltflächen, um andere Mitglieder (z.B. Clients und/oder Desktops bzw. Arbeitsplätze und Applikationen) hinzuzufügen. Desweiteren können Anfangszeitpunkt (Start time) und Endzeitpunkt (End time) sowie vorgeschlagene Zeitspannen (suggested time) spezifiziert werden.

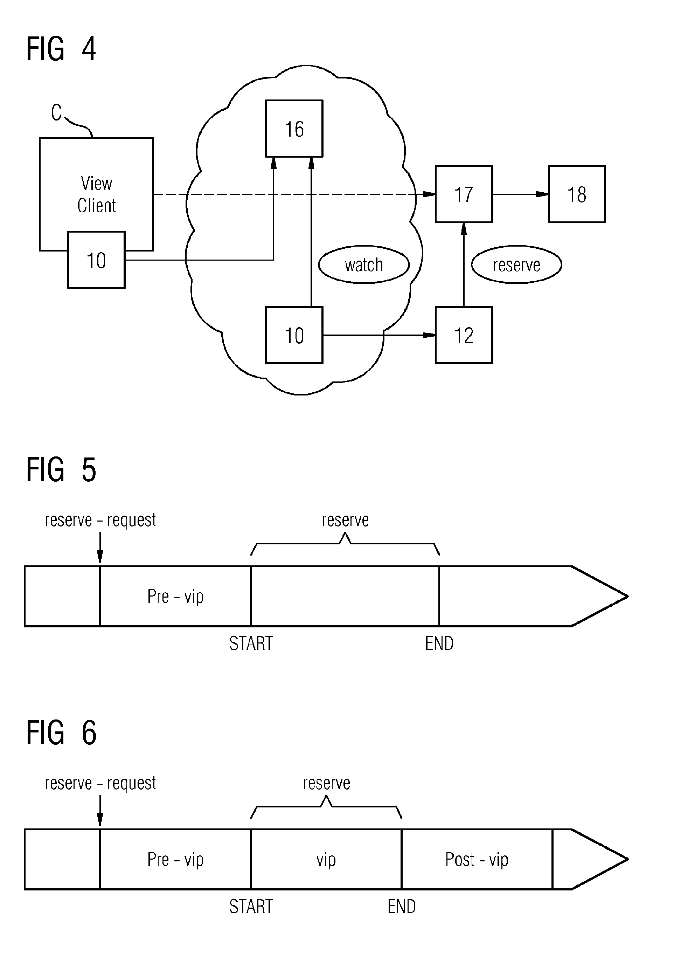

In Figur 4 ist nochmals übersichtsartig ein Ausführungsbeispiel der Erfindung beschrieben, in dem ein Email Client mit dem Reservierungssystem-Client 10 interagiert. Dabei soll darauf hingewiesen sein, dass es nicht zwingend erforderlich ist, hier auf ein bestimmtes Betriebssystem (wie z.B. Microsoft und einem bestimmten Email Client wie beispielsweise Outlook) zurückzugreifen. In dem in Figur 4 dargestellten Beispiel arbeitet ein Anwender (z.B. ein Arzt) in einer Einheit (z.B. am Arbeitsplatz oder im Krankenhaus) oder möchte extern (z.B. im Hotel) auf eine bestimmte Befundungsapplikation zugreifen, die im Datenzentrum liegt und nur über die Cloud zugreifbar ist. Der Anwender arbeitet an seinem Client C, auf dem ein Outlooksystem installiert ist. Das Outlooksystem 10 umfasst mehrere Komponenten, wobei eine Komponente unmittelbar auf dem Client integriert ist. Diese Komponente dient unter anderem zum Erfassen einer Registrierungsanfrage. Diese wird an eine weitere Komponente weitergeleitet, die über das Internet oder das Intranet zugreifbar ist. Vorzugsweise handelt es sich hier um einen Microsoft Exchange Server 16. Der Reservierungssystem-Client 10 überwacht dabei den Microsoft Exchange Server. Dies ist in Figur 4 mit dem Pfeil "watch" gekennzeichnet. Des Weiteren benachrichtigt der Reservierungssystem-Client 10 den Reservierungssystem-Server 12. Der Reservierungssystem-Server 12 ist innerhalb des Datencenters, also innerhalb der Cloud angeordnet und reserviert für einen bestimmten (Rich Thin) Client C, z.B. für eine Befundungsapplikationen. In einer bevorzugten Ausführungsform werden Bildbefundungsapplikationen bereitgestellt, beispielsweise mit der Befundungs-Software "syngo.via" der Siemens AG.

Während in Figur 4 auf der linken Seite der jeweilige Anwender mit seinem Clientgerät C dargestellt ist, der über eine Netzwerkverbindung (z.B. https) mit einem Datenzentrum interagiert, ist das jeweilige Datenzentrum (bzw. die Cloud) auf der rechten Seite dargestellt. Dort finden sich mehrere Instanzen von syngo.via Clients 17 und syngo.via Servern 18, die vom Zuweisungsmodul 11 für den jeweiligen Anwender reserviert worden sind.

Wie in Figur 1 schematisch dargestellt interagieren grundsätzlich der Reservierungssystem-Client 10 und der Reservierungssystem-Server 12 zur Reservierung eines virtuellen Desktops vD. Dabei übernimmt der Reservierungssystem-Server 12 folgende Aktivitäten:
- Er akzeptiert die eingehenden Reservierungsanfragen des Client C
- Er verwaltet die Zustände des Client (umfassend: Normalstatus und Zuweisungsstatus).
- Er verwaltet die Zuweisungen der Anwender und der registrierten Anwender zur Befundungssoftware syngo.via mittels der zugewiesenen virtuellen Desktops vD.

Der Reservierungssystem-Client 10 ist dazu bestimmt, Reservierungsanfragen entgegenzunehmen und diese auf zeitliche Vorgaben zu überprüfen. Insbesondere wird auf dem Client überprüft, ob der Reservierungszeitraum keine maximale Zeitspanne überschreitet und/oder keine minimale Zeitspanne unterschreitet. Darüber hinaus wird überwacht, ob die jeweilige Ressource nicht bereits gebucht ist. Darüber hinaus wird überwacht, ob nicht mehr als ein Arbeitsplatz (technische Ressource auf dem virtuellen Desktop) in demselben Zeitfenster reserviert ist.

Grundsätzlich interagieren der Reservierungssystem-Client 10 und der Reservierungssystem-Server 12 zusammen, und implementieren eine dynamische und dedizierte Zuweisungsstrategie auf technischen Ressourcen eines virtuellen Desktop Pools.

Im Folgenden sei unter Bezugnahme auf die Figuren 5 und 6 ein Registrierungsvorgang für bestimmte Benutzer beschrieben.

Ein Benutzer kann ein bevorzugter und/oder registrierter Benutzer eingeloggt sein bzw. das System bedienen (dieser wird auch als "VIP" (very important person) User gekennzeichnet), falls bestimmte Bedingungen erfüllt sind. Ein VIP User ist ein bevorzugter User gemäß vordefinierbarer Kriterien, der über einen bevorzugten Zugriff auf bestimmte technische Ressourcen verfügen soll. Dazu muss er sich an dem Reservierungssystem durch geeignete Registrierungsprozeduren (Login, Authentifizierungsprozeduren, Passwortzugang etc.) anmelden.

Grundsätzlich erhält ein User nach Zuweisung der Ressource in dem Reservierungszeitraum, also nach Start des Reservierungszeitraums und vor dem Ende des Reservierungszeitraums einen gesicherten Zugriff auf die Ressource. Dies ist in Figur 6 mit der Zeitphase gekennzeichnet, die mit der geschweiften Klammer "reserve" bezeichnet ist.

Es ist jedoch auch möglich, einem registrierten User in einer früheren Zeitphase bereits einen Zugriff auf technische Ressourcen des virtuellen Desktop Pools zu ermöglichen, falls der jeweilige Workplace (der virtuelle Desktop vD) frei ist. Dazu kann der User auch in einem Zeitraum nach Erfassen einer Reservierungsanfrage und vor dem Start des Reservierungszeitraums unter bestimmten Umständen auf einen virtuellen Desktop vD zugreifen, falls dieser verfügbar ist. Dies ist in Figur 5 durch den Zeitraum bzw. Zustand gekennzeichnet, der mit "Pre-VIP" gekennzeichnet ist. Der Zeitraum Pre-VIP liegt jedoch stets nach dem Erfassen einer Reservierungsanfrage, die in den Figuren 5 und 6 mit der Bezeichnung "reserve-request" gekennzeichnet ist. Nach dem Erfassen einer Reservierungsanfrage ("reserve-request") wird ein "normaler" User zu einem "VIP" User, der einen bevorzugten Zugriff auf virtuelle Applikationen und/oder Ressourcen erhält.

Wie in Figur 6 schematisch dargestellt, kann ein User auch nach dem Ende eines Reservierungszeitraums noch im virtuellen Desktop Pool verbleiben, in dem er als Post-VIP im Reservierungssystem angemeldet bleibt und auch in diesem Zeitraum einen bevorzugten Zugriff auf virtuelle Ressourcen erhält, falls diese verfügbar sind.

Wesentlich ist, dass die Zuweisung von Berechtigungen von Usern auf bestimmte virtuelle Ressourcen des Pools immer dynamisch erfolgt. Damit kann sichergestellt werden, dass ein User nur dann bevorzugten Zugriff auf virtuelle Ressourcen erhält, wenn er in dem Reservierungssystem berechtigt ist und eine entsprechende Reservierungsabfrage abgeschickt hat und somit ein Pre-VIP-User geworden ist. Grundsätzlich kann ein berechtigter User nur innerhalb des Reservierungszeitraums (und somit als VIP-User) und als Pre-VIP-User und als Post-VIP-User auf die virtuellen, technischen Ressourcen des Pools zugreifen. Die anderen Anwender sehen die Möglichkeiten des virtuellen Pools nicht. Als registrierter Reservierungssystem-User bzw. als VIP, als Pre-VIP und als Post-VIP ist es möglich, mit all den auf dem Server 12 bzw. auf den virtuellen Maschinen VM₁, VM₂, ...gehosteten Applikationen zu arbeiten, falls diese verfügbar sind. Verlässt der jeweilige Anwender die Cloud und greift in einer späteren Sitzung wieder auf den virtuellen Desktop vD zu, so kann er auf einen anderen Applikationsserver geleitet werden, auf dem der Zustand der jeweiligen Applikation und der Daten unterschiedlich ist.

Gemäß einem Aspekt der Erfindung ist es vorgesehen, dass automatisch eine Kollisionsstrategie bereitgestellt wird, um ein Kollisionsproblem zu lösen. Das Kollisionsproblem tritt unter anderem dann auf, wenn für denselben Reservierungszeitraum eine Reservierungsanfrage von zwei oder mehr Usern bzw. Clients C gestellt wird. Gemäß der Kollisionsstrategie wird überprüft, ob das Zuweisungsmodul auch tatsächlich für denselben Zeitraum dieselbe virtuelle Desktopressource vD unterschiedlichen Usern bzw. Clients C zugewiesen hat. Falls dies tatsächlich der Fall ist, wird berücksichtigt, dass die Verteilung auf die virtuellen Maschinen nicht atomar erfolgt. Desweiteren werden vordefinierbare Vorrangbedingungen (race conditions) definiert, anhand deren die Zuweisung des Zuweisungsmoduls ausgeführt wird. Damit kann eine doppelte Buchung einer virtuellen Maschine VM sicher verhindert werden.

Gemäß einem weiteren Aspekt der Erfindung wird eine weitere Pre-VIP/VIP-Kollisionsstrategie bereitgestellt. Falls ein User zunächst in einem Pre-VIP-Zustand auf einer ersten virtuellen Maschine VM₁ gebucht ist und dann in einen VIP-Zustand auf einer anderen virtuellen Maschine VM₂ gebucht wird, wäre es notwendig, dass er sich von der ersten virtuellen Maschine VM₁ ausloggen und auf der zweiten virtuellen Maschine VM₂ einloggen muss. Da dies für den Anwender wenig komfortabel ist, ist es erfindungsgemäß sichergestellt, dass ein solches (manuelles) Statuswechselerfordernis automatisch erkannt wird und eine Umschaltung automatisch ausgeführt wird. Mittels der Zuweisungsstrategie wird dies automatisch erkannt, so dass die erste virtuelle Maschine in diesem Fall auch für den Reservierungszeitraum für den jeweiligen User gebucht wird, um ein erneutes "login" zu vermeiden.

Gemäß einem weiteren Aspekt der Erfindung umfasst das Zuweisungsmodul noch weitere Zuweisungsstrategien, um virtuelle Maschinen für VIP-User wieder frei zu machen. In diesem Fall wird automatisch ein Suchlauf durchgeführt, ob Pre-VIP-User und/oder Post-VIP-User auf der jeweiligen virtuellen Maschine angemeldet sind. Falls gleichzeitig ein Reservierungszeitraum für einen VIP-User gebucht ist, so wird der Zugriff des Pre-VIP-Users und/oder des Post-VIP-Users aufgehoben, um dem VIP-User einen Zugriff gewähren zu können.

Ein wesentlicher Vorteil der erfindungsgemäßen Lösung ist in der Anwendung für medizinisch kritische Untersuchungen zu sehen. Beispielsweise ist es häufig im Vorfeld bekannt, falls für einen bestimmten Patienten (ressourcenintensive, aufwendige) bildgebende Verfahren durchzuführen sind. Diese Planungsdaten können vorteilhafterweise erfindungsgemäß automatisch bei der Reservierung von virtuellen Desktops berücksichtigt werden. Damit können Cloud-Arbeitsplätze sehr effizient bereitgestellt werden, in dem die jeweiligen virtuellen Ressourcen dynamisch reserviert und wieder freigegeben werden. Die Reservierung erfolgt dabei über ein Zuweisungsmodul, in dem eine Zuweisungsstrategie implementiert ist, die dynamisch und dediziert ist. Darüber hinaus kann sichergestellt werden, dass der (registrierte) Anwender während des Reservierungszeitraums garantiert einen Cloud-Arbeitsplatz erhält, und dass sein Arbeitszustand zwischen den einzelnen Arbeitssitzungen (sessions) gesichert wird.

Abschließend sei darauf hingewiesen, dass die Beschreibung der Erfindung und die detaillierte Figurenbeschreibung grundsätzlich nicht einschränkend im Hinblick auf bestimmte physikalische Realisierungen der Erfindung zu verstehen sind. Für einen Fachmann ist es insbesondere offensichtlich, dass die Erfindung teilweise oder vollständig in Soft- und/oder Hardware und/oder auf mehrere physikalische Produkte - dabei insbesondere auch Computerprogrammprodukte - verteilt realisiert werden kann. So ist es insbesondere möglich, bestimmte Abschnitte des Reservierungsverfahrens auf dem Reservierungssystem Client und andere Abschnitte des Verfahrens auf dem Reservierungssystem-Server auszuführen. Darüber hinaus können einzelne Abschnitte auch auf andere angeschlossene Einheiten ausgelagert werden.

### Bezugszeichenliste

- C: Client
- 10: Reservierungssystem-Client
- 11: Zuweisungsmodul
- 12: Reservierungssystem-Server - reservation system server
- 13: Adapter
- VM: Virtuelle Maschine - virtual machine
- vD: virtueller Desktop
- 16: Exchange Server
- 17: Syngo.via Client(s)
- 18: Syngo.via Server(s)
- Watch: Überwache
- Reserve: Reserviere
- 1: Erfasse Reservierungsanfrage
- 2: Weiterleiten der Reservierungsanfrage an Reservierungssystem Client
- 3: Zuweisen eines virtuellen Desktops gemäß dynamischer und dedizierter Zuweisungsstrategie
- 4: Erstellen einer Zugriffs auf virtuellen Desktop während Reservierungszeitraum
- 5: Aktivieren von Zuweisungsstatus reserve-
- request: Erfassen einer Reservierungsanfrage

## Patentansprüche

1. Reservierungssystem zur entfernten Reservierung eines virtuellen Desktops für einen Client über einen virtuellen Desktop Pool, wobei der virtuelle Desktop technische Ressourcen zur medizintechnischen Datenverarbeitung umfasst und auf einem Host gehosted ist, umfassend:
- Ein Client-seitiges Erfassungsmodul zum Erfassen einer Reservierungsanfrage für einen Reservierungszeitraum für einen virtuellen Desktop
- Einen Reservierungssystem-Client, der zum Empfang von zumindest einer Reservierungsanfrage von dem Erfassungsmodul und zum Weiterleiten der Reservierungsanfrage an einen Reservierungssystem-Server bestimmt ist
- Ein Zuweisungsmodul, das von dem Reservierungssystem-Server umfasst ist und zum dynamischen, dedizierten und automatischen Zuweisen eines virtuellen Desktops des virtuellen Desktop Pools an den anfragenden Client für einen bestimmten Reservierungszeitraum auf garantierte Weise bestimmt ist und wobei das Zuweisungsmodul weiterhin dazu bestimmt ist, eine Zustandssicherung zwischen mehreren Sitzungen auszuführen
- Einen Adapter zum Erstellen einer Zugriffsmöglichkeit für den anfragenden Client auf die dem anfragenden Client zugewiesenen virtuellen Desktop während des bestimmten Reservierungszeitraums und wobei der Adapter weiterhin dazu bestimmt ist, anschließend die Desktop Ressource freizugeben, und wobei der Adapter dazu bestimmt ist, einen Zuweisungsstatus für den anfragenden Client zu aktivieren, wobei der Client in dem Zuweisungsstatus auch vor dem Reservierungszeitraum einen Zugriff auf den ihm zugewiesenen virtuellen Desktop erhält, falls der jeweils zugewiesen virtuelle Desktop Verfügbarkeitskriterien erfüllt.

2. Verfahren zur entfernten Reservierung eines virtuellen Desktops für einen Client über einen virtuellen Desktop Pool, wobei der virtuelle Desktop technische Ressourcen zur medizintechnischen Datenverarbeitung umfasst und auf einem Host gehosted ist, umfassend:
- Erfassen einer Reservierungsanfrage in einem Reservierungszeitraum für einen virtuellen Desktop auf einem anfragenden Client
- Weiterleiten der Reservierungsanfrage an einen Client des Reservierungssystems
- Weiterleiten der Reservierungsanfrage von dem Client des Reservierungssystems an einen Server des Reservierungssystems
- Dynamisches, dediziertes und automatisches Zuweisen eines virtuellen Desktops des virtuellen Desktop Pools an den anfragenden Client für den bestimmten Reservierungszeitraum auf garantierte Weise und wobei eine Zustandssicherung zwischen mehreren Sitzungen erfolgt
- Erstellen einer Zugriffsmöglichkeit für den anfragenden Client auf den ihm zugewiesenen virtuellen Desktop während des bestimmten Reservierungszeitraums und anschlie-βende Freigabe des virtuellen Desktops und
- Aktivieren eines Zuweisungsstatus für den anfragenden Client, wobei der Client in dem Zuweisungsstatus auch vor dem Reservierungszeitraum einen Zugriff auf den ihm zugewiesenen virtuellen Desktop erhält, falls der jeweils zugewiesen virtuelle Desktop Verfügbarkeitskriterien.

3. Verfahren nach Patentanspruch 2, wobei das Erfassen der Reservierungsanfrage und/oder des Reservierungszeitraumes über einen Email-Client lokal auf dem Client abgewickelt wird.

4. Verfahren nach Patentanspruch 2, wobei neben dem Erfassen noch eine Überprüfung von vorbestimmbaren Reservierungsbedingungen auf dem anfragenden Client ausgeführt wird, wobei die Reservierungsbedingungen umfassen:
- Eine Maximalbedingung, anhand der überprüft wird, dass der Reservierungszeitraum eine Maximalzeitschwelle nicht überschreitet;
- Eine Minimalbedingung, anhand der überprüft wird, dass der Reservierungszeitraum eine Minimalzeitschwelle nicht unterschreitet;
- Eine Ausschließlichkeitsbedingung, anhand der überprüft wird, dass der virtuelle Desktop nicht bereits reserviert und/oder gebucht ist;
- Eine Atomaritätsbedingung, anhand der überprüft wird, dass nicht mehr als ein virtueller Desktop zu einem Zeitpunkt reserviert ist.

5. Verfahren nach Patentanspruch 2, wobei das Reservierungssystem einen Host-Anteil umfasst und wobei auf dem Host-Anteil folgendes ausgeführt wird:
- Akzeptieren einer Reservierungsanfrage des anfragenden Clients gemäß einer auswählbaren Reservierungspolitik;
- Verwalten von Zuständen der Clients, insbesondere der anfragenden Clients;
- Verwalten von Zuweisungen von virtuellen Desktops zu anfragenden Clients.

6. Verfahren nach Patentanspruch 2, wobei das Erfassen und/oder das Zuweisen über eine Internetprotokollverbindung, insbesondere über einen Web-Service, ausgeführt werden.

7. Verfahren nach Patentanspruch 2, wobei die Desktop Ressource eine medizinische Befundungsapplikation ist.

8. Computerprogrammprodukt, das auf einem in einen Computer einsetzbaren Medium gespeichert ist, umfassend computerlesbare Computerprogrammabschnitte, mit denen ein Computer das Verfahren nach Patentanspruch 2 ausführen kann.
